# EUROPÄISCHE PATENTSCHRIFT

(11) **EP 0 473 933 B1**
(45) Veröffentlichungstag und Bekanntmachung des Hinweises auf die Patenterteilung: **10.07.1996**
(21) Anmeldenummer: 91112575.5
(22) Anmeldetag: 26.07.1991
(51) Int. Cl.: A61C 13/265, A61C 13/275, A61C 13/273, A61C 13/225

(54) **Verbindungsmechanismus zur Verbindung von zwei zahntechnischen Teilen miteinander**
Device for the connection of two dental parts
Dispositif pour connecter deux éléments prothétiques dentaires

(30) Priorität: 07.09.1990 DE 4028463
(43) Veröffentlichungstag der Anmeldung: 11.03.1992
(73) Patentinhaber: Kreylos, Hans-Albert, D-27619 Schiffdorf (DE)
(72) Erfinder: Kreylos, Hans-Albert, D-27619 Schiffdorf (DE)
(74) Vertreter: Jabbusch, Wolfgang, Dr.Jur. Jabbusch, Wehser & Lauerwald Patentanwälte

(56) Entgegenhaltungen:
- DE-A- 1 918 984
- DE-C- 868 047
- US-A- 2 339 674

## Beschreibung

Die Erfindung betrifft einen Verbindungsmechanismus zur Verbindung von zwei zahntechnischen Teilen miteinander, der einen Schnappschloßbereich aufweist, der einen Vorsprung eines ersten zahntechnischen Teiles (Primärteil) umfaßt, der in einen Hohlraum des Verbindungsmechanismus am zweiten zahntechnischen Teil (Sekundärteil) einführbar und mit einer in den Hohlraum eingebrachten Sprengfeder fixierbar ist.

Ein Verbindungsmechanismus der vorbezeichneten Gattung ist in der Druckschrift DE-OS 19 18 984 offenbart. Bei diesem bekannten Verbindungsmechanismus ist der Hohlraum des Sekundärteiles durch eine parallelwandige Matrize begrenzt. In diesen Hohlraum ist die als geschlitzter, zylindrischer Federring ausgebildete Sprengfeder lose eingebracht und mit einer Schraube festgelegt. Zwischen den Wänden der Matrize und der außenliegenden Mantelflache des Federringes ist ein Spalt ausgebildet, damit sich der Federring bei Einführung des als Schaft ausgebildeten Vorsprungs des Primärteiles in ihn durch eine Spreizung aufweiten kann. Nach dieser Einführung federt der Federring zur Fixierung des Schaftes in seine ursprüngliche Lage zurück.

Diese Ausbildung von Hohlraum und Sprengfeder ist lediglich auf eine funktionelle Vorbindung der zahntechnischen Teile miteinander hin konstruktiv ausgerichtet. Einander gegenüberliegende Flächen von parallelwandiger Matrize und Federring sind jeweils gerade ausgebildet, und der Federring liegt nicht an der Matrize an. Der aus der DE-OS 19 18 984 bekannte Verbindungsmechanismus weist somit den Nachteil auf, daß er keine Abdichtung des Hohlraumes des Sekundärteiles gegen ein Eindringen von aeroben Keimen gewährleistet, da durch den ausgebildeten Spalt zwischen Sprengfeder und den Wänden der Matrize Keime in den Hohlraum eindringen und sich darin vermehren können.

Die Druckschrift DE-PS 868 047 offenbart gleichfalls einen Verbindungsmechanismus der eingangs genannten Gattung. Um das Primärteil dieses Verbindungsmechanismus durch eine Ausübung von Kaudruck auf das Sekundärteil nicht zu stark zu belasten, sind zwischen Primärteil und Sekundärteil Sprengfedern angeordnet. Die Sprengfedern können durch in den Hohlraum eindringende Keime weiträumig umgangen werden, so daß der in der DE-PS 868 047 beschriebene Verbindungsmechanismus gleichfalls keine Abdichtung des Hohlraums gewährleistet.

Der Erfindung liegt die Aufgabe zugrunde, einen Verbindungsmechanismus der eingangs beschriebenen Gattung aufzuzeigen, der bei einfachem Aufbau zusätzlich das Eindringen von aeroben Keimen in den Hohlraum des Sekundärteiles verhindert.

Diese Aufgabe ist erfindungsgemäß dadurch gelöst, daß der Hohlraum in seinem Querschnitt einen relativ engeren Einführkanal zur Einführung der Sprengfeder und des Vorsprunges des Primärteiles und eine sich daran anschließende, relativ weitere Aushöhlung zur den Einführkanal abdichtenden Einlagerung der Sprengfeder hat, wozu die Übergänge zwischen Einführkanal und Aushöhlung schulterartig ausgebildet sind und die Sprengfeder auswärts hinter die schulterartigen Übergänge vorragende Vorsprünge hat.

Zur Einführung der Sprengfeder in die Aushöhlung wird die Sprengfeder vorzugsweise so dicht zusammengebogen, daß die Sprengfeder durch die Öffnung und den Einführkanal des Hohlraumes paßt. Die Vorsprünge der Sprengfeder hintergreifen nach Einführung und Loslassen der Sprengfeder in der Aushöhlung die schulterartigen Übergänge zwischen Einführkanal und Aushöhlung zur Verrastung der Sprengfeder in der Aushöhlung. Der Vorsprung des Primärteils ist in die Sprengfeder einführbar, wobei die Sprengfeder automatisch als Hohlraumfüllung dient. Es können weitere Abdichtungen vorgesehen sein, um das Eindringen und die Vermehrung von aeroben Keimen zu verhindern.

Zudem ist der Aufbau des Verbindungsmechanismus wesentlich vereinfacht, da er aus nur drei Teilen, Primärteil, Sekundärteil und Sprengfeder zusammengesetzt ist.

Nach einer ersten Weiterbildung der Erfindung hat der Vorsprung des Primärteiles einen in die Aushöhlung vorstehenden Kopfbereich, der von der Sprengfeder hintergreifbar ist. Durch das Hintergreifen des Kopfbereiches ist eine sichere Verbindung zwischen dem Primärteil und der Sprengfeder gewährleistet.

Die erfindungsgemäße Sprengfeder ist vorzugsweise einfach klammerartig ausgebildet. Die Sprengfeder kann dazu aus einem elastisch federnden Werkstoff ausgebildet sein und im wesentlichen einen U-Profil-Querschnitt aufweisen. Eine klammerartige Sprengfeder ist besonders einfach und kostengünstig herstellbar, in einfacher Weise in den Schnappschloßbereich einsetzbar, bespielsweise durch Erfassen an den Schenkelenden und Zusammendrücken der Klammer, und eine klammerartige Sprengfeder ist besonders gut formschlüssig passend in einem entsprechenden Hohlraum des Schnappschloßbereiches verrrastbar.

Eine Weiterbildung der erfindungsgemäßen Sprengfeder sieht vor, daß die lichte Weite zwischen den Schenkeln des U-Profils wenigstens eine Engstelle aufweist, die enger ist, als eine in Richtung der Basis des U-Profils folgende Erweiterung, die zur Aufnahme des Kopfbereiches des Vorsprunges des Schnappschloßbereiches des Primärteiles vorgesehen ist, wobei der Einführweg dieses Kopfbereiches zwischen den Schenkeln, parallel zu den Schenkeln, hin zur Erweiterung festgelegt ist.

Bei eingeschnapptem Vorsprung des Primärteiles hintergreifen die Schenkel der Sprengfeder an der Engstelle den Kopfbereich des Vorsprunges und halten diesen fixiert.

Die Sprengfeder kann kostengünstig aus Metall oder z.B. auch aus Kunststoff geformt sein. Beispielsweise kann ein ganzes Strangprofil aus Metall gefertigt werden, von dem dann einzelne Abschnitte als Sprengfedern abgetrennt werden.

Die Aushöhlung des Hohlraumes des Sekundärteiles ist vorzugsweise so bemessen, daß sie ausreichend Spiel für eine Dehnung der Sprengfeder bei Einführung des Vorsprunges des Primärteiles läßt. Dabei sollte aber der Spielraum so klein bemessen sein, daß nach Einführung des Vorsprunges in die Sprengfeder die Außenseite der Sprengfeder relativ eng an der Wand der Aushöhlung anliegt, so daß nach Herstellung der erfindungsgemäßen Verbindung kein Spiel mehr verbleibt und somit eine wackelfreie Verbindung hergestellt ist.

Eine weitere Weiterbildung der Erfindung sieht vor, daß die Schenkel der Sprengfeder Verlängerungen als Handhaben zum Erfassen der Sprengfeder aufweisen, welche bei in die Aushöhlung eingebrachter Sprengfeder in den Einführkanal vorragen. An diesen Verlängerungen kann die Sprengfeder somit erfaßt werden, beispielsweise mit einem pinzettenähnlichen Werkzeug, so daß die Schenkel wieder zusammengedrückt werden können und eine Sprengfeder aus der Aushöhlung wieder herausgenommen werden kann.

Die klammerartige Sprengfeder ist vorzugsweise als Formteil ausgebildet, bei dem die Federkraft, Engstelle und Erweiterung, sowie Vorsprünge und Schenkelverlängerungen durch unterschiedliche Wandstärken in unterschiedlichen Bereichen festgelegt sind. Bei der Fertigung kann die Sprengfeder somit mit allen wesentlichen Bereichen praktisch mit einem einzigen Fertigungsschritt hergestellt werden.

Ein Ausführungsbeispiel, aus dem sich weitere erfinderische Merkmale ergeben, ist in der Zeichnung dargestellt. Es zeigen:
- Fig. 1: einen Längsschnitt durch einen Schnappschloßbereich eines erfindungsgemäßen Verbindungsmechanismus, der einen Vorsprung eines nur angedeuteten Primärteiles und einen Hohlraum eines Sekundärteiles umfaßt, und
- Fig. 2: eine perspektivische Ansicht des Vorsprunges des Primärteiles gemäß Fig. 1.

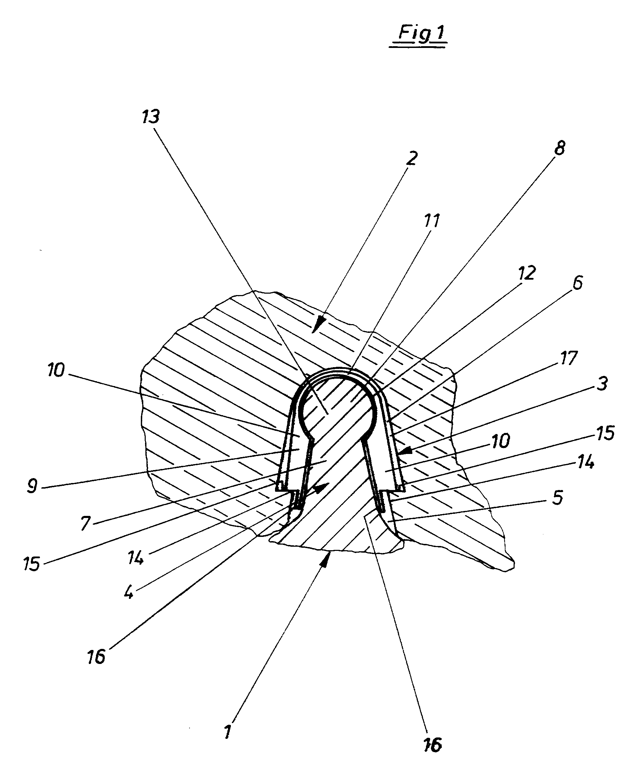

Fig. 1 zeigt in einem Längsschnitt ein Primärteil 1 und ein Sekundärteil 2, die zahntechnische Teile, beispielsweise eine Zahnkrone und Zahnersatzteil, darstellen sollen. Beide Teile 1, 2 sind über den erfindungsgemäßen Verbindungsmechanismus miteinander verbunden.

Der Verbindungsmechanismus umfaßt einen Hohlraum 3 des Sekundärteiles 2 und einen Vorsprung 4 des Primärteiles 1, der in den Hohlraum einführbar ist.

Der Hohlraum 3 ist etwa pilzförmig ausgebildet, und zwar mit einem relativ engeren Einführkanal 5 und einer relativ weiteren Aushöhlung 6.

Der Vorsprung 4 umfaßt einen relativ schlankeren Halsbereich 7 und einen relativ breiteren, hintergreifbaren Kopfbereich 8.

Als Verbindungselement zwischen dem Hohlraum 3 und dem Vorsprung 4 fungiert eine Sprengfeder 9, die in den Hohlraum 3, hauptsächlich in die Aushöhlung 6 eingesetzt und dort verrastet ist. Die Sprengfeder 9 wurde durch den Einführkanal 5 eingeführt, wozu sie zunächst eng zusammengebogen worden ist und in der Aushöhlung 6 losgelassen worden ist.

Die Sprengfeder 9 ist im wesentlichen U-Profil-förmig ausgebildet. Sie weist zwei federnd zusammendrückbare Schenkel 10 auf und eine Basis 11. Zur Einführung des Kopfbereiches 8 des Vorsprunges 4 in die klammerartige Sprengfeder 9 weist diese eine basisnahe Erweiterung 12 auf, die in ihrer Formgebung dem Kopfbereich 8 angepaßt ist und in deren Bereich die Wandstärke des Sprengfederprofils geringer ausgebildet ist. Die Schenkelbereiche 10 der Sprengfeder 9 sind wandstärker ausgebildet, insbesondere unter Ausbildung einer Engstelle 13 zwischen den Schenkeln 10, wodurch der in die Erweiterung 12 eingeführte Kopfbereich 8 des Vorsprunges 4 hintergriffen wird.

Außerdem weisen die Schenkel 10 der Sprengfeder 9 auswärts gerichtete, schulterartige Vorsprünge 14 auf, die die ebenfalls schulterartigen Übergänge 15 zwischen dem Einführkanal 5 und der Aushöhlung 6 des Hohlraumes 3 hintergreifen und an diesen anschlagen.

Aufgrund der Vorsprünge 14 ist die Sprengfeder 9 in der Aushöhlung 6 fixiert bzw. verrastet. Aufgrund der Engstelle 13 ist der Kopfbereich 8 des Vorsprunges 4 in der Erweiterung 12 der Sprengfeder 9 verrastet, so daß insgesamt eine sichere Verbindung zwischen Primärteil 1 und Sekundärteil 2 besteht.

Die Schenkel der Sprengfeder 9 weisen Verlängerungen 16 auf, die in den Einführkanal 5 des Hohlraumes 3 vorragen und als Handhaben zum Ergreifen der Sprengfeder 9 dienen können. Durch Zusammendrücken der Verlängerungen 16 gegeneinander, beispielweise mittels einer Pinzette, können die Schenkel 10 soweit zusammengedrückt werden, daß die Sprengfeder 9 durch den Einführkanal 5 in den Hohlraum 3 eingebracht werden kann.

Zwischen den Schenkeln 10 der Sprengfeder 9 und der Wand der Aushöhlung 6 ist in der Fig. 1 ein Spielraum 17 angedeutet. Ein gewisser Spielraum 17 muß vorhanden sein, um eine Federbewegung der Schenkel 10 zu ermöglichen, also um ein Ein- oder auch Ausrasten des Kopfbereiches 8 in der Sprengfeder 9 zu erlauben. In der Fig. 1 ist der Spielraum 17 allerdings etwas übertrieben gezeichnet, um diesen deutlich zu machen. Der Spielraum 17 sollte lediglich minimal ausgebildet sein, um eine wackelfreie Verbindung zwischen Primärteil 1 und Sekundärteil 2 zu gewährleisten.

Im Angrenzungsbereich zwischen Primärteil 1 und Sekundärteil 2 können weitere Abdichtungselemente vorgesehen sein.

Das Primärteil 1 und das Sekundärteil 2 können beliebige zahntechnische Teile sein, beispielsweise Zahnkrone und Teilprothese, wobei die gezeigte Verbindung, insbesondere der Vorsprung 4 als Steg, auch einen Zwischenraum zwischen einzelnen Zähnen überbrücken kann.

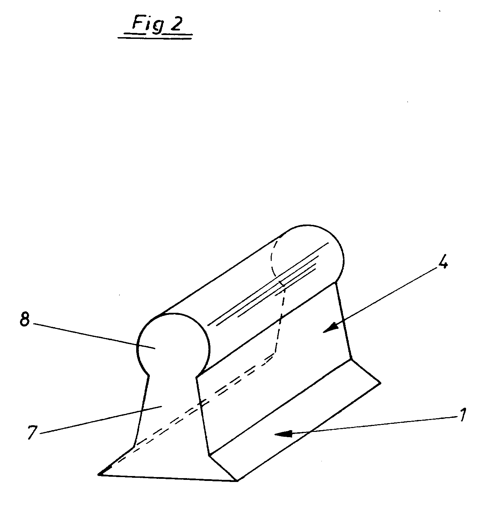

In der Fig. 2 ist der Vorsprung 4 noch einmal schematisch in einer perspektivischen Ansicht dargestellt. Im dargestellten Falle weist der Vorsprung 4 eine vierkantige, längliche Draufsicht auf. Es sind aber selbstverständlich auch andere Draufsichten möglich, beispielsweise rotationssymmetrische, quadratische oder dergleichen.

Bei dem Ausführungsbeispiel gemäß Fig. 2 kann mit besonderem Vorteil die zugehörige Sprengfeder 9 als Strangabschnitt eines Profilabschnittes ausgebildet sein. Eine Vielzahl von Sprengfedern 9 kann daher in einfacher und kostengünstiger Weise hergestellt werden, indem Abschnitte von einem entsprechenden Profilstrang abgetrennt werden.

## Patentansprüche

1. Verbindungsmechanismus zur Verbindung von zwei zahntechnischen Teilen miteinander, der einen Schnappschloßbereich aufweist, der einen Vorsprung eines ersten zahntechnischen Teiles (Primärteil) umfaßt, der in einen Hohlraum des Verbindungsmechanismus am zweiten zahntechnischen Teil (Sekundärteil) einführbar und mit einer in den Hohlraum eingebrachten Sprengfeder fixierbar ist,
**dadurch gekennzeichnet,**
daß der Hohlraum (3) in seinem Querschnitt einen relativ engeren Einführkanal (5) zur Einführung der Sprengfeder (9) und des Vorsprunges (4) des Primärteiles (1) und eine sich daran anschließende, relativ weitere Aushöhlung (6) zur den Einführkanal (5) abdichtenden Einlagerung der Sprengfeder (9) hat, wozu die Übergänge (15) zwischen Einführkanal (5) und Aushöhlung (6) schulterartig ausgebildet sind und die Sprengfeder (9) auswärts hinter die schulterartigen Übergänge (15) vorragende Vorsprünge (14) hat.

2. Verbindungsmechanismus nach Anspruch 1, dadurch gekennzeichnet, daß der Vorsprung (4) des Primärteiles (1) einen in die Aushöhlung (6) vorstehenden Kopfbereich (8) hat, der von der Sprengfeder (9) hintergreifbar ist.

3. Verbindungsmechanismus nach Anspruch 1 oder 2, dadurch gekennzeichnet, daß die Sprengfeder (9) klammerartig ausgebildet ist.

4. Verbindungsmechanismus nach Anspruch 3, dadurch gekennzeichnet, daß die Sprengfeder (9) aus einem elastisch federnden Werkstoff ausgebildet ist und im wesentlichen einen U-Profil-Querschnitt aufweist.

5. Verbindungsmechanismus nach Anspruch 4, dadurch gekennzeichnet, daß die lichte Weite zwischen den Schenkeln (10) des U-Profils wenigstens eine Engstelle (13) aufweist, die enger ist, als eine in Richtung der Basis (11) des U-Profils folgende Erweiterung (12), die zur Aufnahme des Kopfbereiches (8) des Vorsprunges (4) des Primärteiles (1) vorgesehen ist, wobei der Einführweg dieses Kopfbereiches (8) zwischen den Schenkeln (10), parallel zu den Schenkeln hin zur Erweiterung (12) festgelegt ist.

6. Verbindungsmechanismus nach einem der vorhergehenden Ansprüche, dadurch gekennzeichnet, daß die Sprengfeder (9) aus Metall geformt ist.

7. Verbindungsmechanismus nach einem der vorhergehenden Ansprüche, dadurch gekennzeichnet, daß die Aushöhlung (6) so bemessen ist, daß sie ausreichend Spiel (17) für eine Dehnung der Sprengfeder (9) bei Einführung des Vorsprunges (4) des Primärteiles (1) läßt.

8. Verbindungsmechanismus nach einem der Ansprüche 5 - 7, dadurch gekennzeichnet, daß die Schenkel (10) der Sprengfeder (9) Verlängerungen (16) als Handhaben zum Erfassen der Sprengfeder (9) aufweisen, welche bei in die Aushöhlung (6) eingebrachter Sprengfeder (9) in den Einführkanal (5) vorragen.

9. Verbindungsmechanismus nach einem der Ansprüche 3 - 8, dadurch gekennzeichnet, daß die klammerartige Sprengfeder (9) als Formteil ausgebildet ist, bei dem die Federkraft, Engstelle (13) und Erweiterung (12) sowie Vorsprünge (13) und Schenkelverlängerungen (16) durch unterschiedliche Wandstärken in unterschiedlichen Bereichen festgelegt bzw. ausgebildet sind.

10. Verbindungsmechanismus nach einem der vorhergehenden Ansprüche, dadurch gekennzeichnet, daß die Sprengfeder (9) herstellungsmäßig ein Abschnitt eines Strangprofiles ist.

## Claims

1. A connecting mechanism for connecting two dental parts, having a snap-locking region comprising a projection of a first dental part (primary part) insertable into an opening of the connecting mechanism in the second dental part (secondary part) and fixable by a snap ring inserted into the opening, characterised in that the opening (3) has, in cross-section, a relatively narrower insertion channel (5) for inserting the snap ring (9) and the projection (4) of the primary part (1), and an adjacent, relatively wider cavity (6) for mounting the snap ring (9) in a manner sealing the insertion channel (5), for which purpose the transition regions (15) between the insertion channel (5) and the cavity (6) are formed in the manner of shoulders and the snap ring (9) has projections (14) projecting outwards behind the shoulder-type transition regions (15).

2. A connecting mechanism according to claim 1, characterised in that the projection (4) of the primary part (1) has a head region (8) projecting into the cavity (6), the snap ring (9) being engageable behind the head region (8).

3. A connecting mechanism according to claim 1 or 2, characterised in that the snap ring (9) is formed in the manner of a clamp.

4. A connecting mechanism according to claim 3, characterised in that the snap ring (9) is formed of an elastically resilient material and has a substantially U-shaped cross-section.

5. A connecting mechanism according to claim 4, characterised in that the clear width between the arms (10) of the U-section has at least one narrow point (13) narrower than a widened portion (12) adjoining in the direction of the base (11) of the U-section and provided for receiving the head region (8) of the projection (4) of the primary part (1), the said head region (8) being inserted between the arms (10), parallel thereto, towards the widened portion (12).

6. A connecting mechanism according to any one of the preceding claims, characterised in that the snap ring (9) is formed of metal.

7. A connecting mechanism according to any one of the preceding claims, characterised in that the cavity (6) is dimensioned in such a manner that it provides sufficient clearance (17) for expansion of the snap ring (9) on insertion of the projection (4) of the primary part (1).

8. A connecting mechanism according to any one of claims 5 to 7, characterised in that the arms (10) of the snap ring (9) have extensions (16) as grips for holding onto the snap ring (9), the extensions (16) projecting into the insertion channel (5) when the snap ring (9) has been inserted into the cavity (6).

9. A connecting mechanism according to any one of claims 3 to 8, characterised in that the clamp-type snap ring (9) is formed as a moulded part, wherein the elastic force, narrow point (13) and widened portion (12) and the projections (13) [sic - 14] and arm extensions (16) are determined or formed by different wall thicknesses in different regions.

10. A connecting mechanism according to any one of the preceding claims, characterised in that, from the point of view of manufacture, the snap ring (9) is part of an extruded section.

## Revendications

1. Mécanisme de liaison destiné à assembler deux éléments prothétiques dentaires, qui présente une zone de serrure à déclic, qui comprend une saillie d'un premier élément prothétique dentaire (élément primaire), qui peut être introduit dans une cavité du mécanisme de liaison sur le second élément prothétique dentaire (élément secondaire) et qui peut être fixé au moyen d'un jonc introduit dans la cavité,
caractérisé
en ce que la cavité (3) possède, dans sa section transversale, un canal d'introduction (5) relativement étroit pour l'introduction du jonc (9) et de la saillie (4) de l'élément primaire (1) et un évidement (6) relativement large, se raccordant au canal d'introduction pour le montage, rendant étanche le canal d'introduction (5), du jonc (9), les transitions (15) entre le canal d'introduction (5) et l'évidement (6) étant conformées à la manière d'épaulements et le jonc (9) possédant des saillies (14) dépassant à l'extérieur derrière les transitions (15) en forme d'épaulements.

2. Mécanisme de liaison selon la revendication 1, caractérisé en ce que la saillie (4) de l'élément primaire (1) possède une zone de tête (8), dépassant dans l'évidement (6), derrière laquelle peut passer le jonc (9).

3. Mécanisme de liaison selon la revendication 1 ou 2, caractérisé en ce que le jonc (9) est conformé en agrafe.

4. Mécanisme de liaison selon la revendication 3, caractérisé en ce que le jonc (9) est fait d'un matériau formant ressort élastiquement et présente essentiellement une section transversale de profil en U.

5. Mécanisme de liaison selon la revendication 4, caractérisé en ce que l'ouverture intérieure entre les branches (10) du profil en U présente au moins un étranglement (13) qui est plus étroit qu'un élargissement (12) venant ensuite en direction de la base (11) du profil en U, qui est prévu pour recevoir la zone de tête (8) de la saillie (4) de l'élément primaire (1), le parcours d'introduction de cette zone de tête (8) entre les branches (10) étant fixé parallèlement aux branches vers l'élargissement (12).

6. Mécanisme de liaison selon l'une des revendications précédentes, caractérisé en ce que le jonc (9) est en métal.

7. Mécanisme de liaison selon l'une des revendications précédentes, caractérisé en ce que l'évidement (6) a des dimensions telles qu'il laisse un jeu (17) suffisant pour une dilatation du jonc (9) lors de l'introduction de la saillie (4) de l'élément primaire (1).

8. Mécanisme de liaison selon l'une des revendications 5 à 7, caractérisé en ce que les branches (10) du jonc (9) présentent des prolongements (16) servant de poignées pour saisir le jonc (9), qui dépassent dans le canal d'introduction (5), lorsque le jonc (9) est introduit dans l'évidement (6).

9. Mécanisme de liaison selon l'une des revendications 3 à 8, caractérisé en ce que le jonc (9) en forme d'agrafe est une pièce de forme dans laquelle la force de ressort, l'étranglement (13) et l'élargissement (12) ainsi que les saillies (13) et les prolongements (16) des branches sont définis ou formés par des épaisseurs de paroi différentes dans des zones différentes.

10. Mécanisme de liaison selon l'une des revendications précédentes, caractérisé en ce que le jonc (9) est, sur le plan de la fabrication, une portion d'un profilé extrudé.
